# EUROPEAN PATENT SPECIFICATION

(11) **EP 3 202 989 B1**
(45) Date of publication and mention of the grant of the patent: **29.08.2018**
(21) Application number: 16205746.7
(22) Date of filing: 21.12.2016
(51) Int. Cl.: E03C 1/23, A47K 1/14, F16K 31/58

(54) **DEVICE FOR OPENING AND CLOSING A PLUG FOR SANITARY FITTINGS**
VORRICHTUNG ZUM ÖFFNEN UND SCHLIESSEN EINES STÖPSELS EINER ABLAUFGARNITUR
DISPOSITIF POUR OUVRIR ET FERMER UNE BONDE D'UN APPAREIL SANITAIRE

(30) Priority: 03.02.2016 IT UB20160248
(43) Date of publication of application: 09.08.2017
(73) Proprietor: CRISTINA S.r.l., 28024 Gozzano (NO) (IT)
(72) Inventor: Baki, Gyozo Janos, 28010 Bolzano Novarese (IT)
(74) Representative: Gregorj S.r.l.

(56) References cited:
- EP-A1- 1 338 707
- US-A- 3 220 695
- US-A- 5 421 552
- US-A1- 2010 024 108

## Description

### FIELD OF THE INVENTION

The present invention refers to an opening and closing device for sanitary fittings according to the preamble of claim 1.

### STATE OF THE ART

As it is known, in the field of the sanitary fittings, closing plugs for sanitary devices are used, such as for example for basins, sinks, receptors, bathtubs, which comprise a typically mushroom-shaped movable plug, which is coupled to a stationary drain, inserted into or anyway connected to a draining hole of the sanitary device.

The devices for actuating closing plugs, typically comprise lever mechanisms and/or transmissions for actuating them, particularly in order to pass from the lowered or closed condition, wherein the plug occludes the draining hole, to a raised or open condition, wherein the plug enables the water to flow down through the draining hole.

However, such lever mechanisms have the drawback of requiring a suitable calibration and adjustment; further, due to the corrosion, scales and mechanical clearances of the different components, such known mechanisms over time do not ensure an optimal operation of the plug; further, such mechanisms tend to get substantially unyielding over time, so that they are not easy to be actuated. Further such lever devices are often bulky and unattractive, since they have exposed components, for example in the basins, sinks, bidets, and bathtubs.

In order to overcome these problems, snap-closing devices were devised which avoid using lever mechanisms or transmissions. Such devices comprise a snap device wherein a movable part is fixed to the plug and a stationary part is connected to the drain. For example, a snap-closing device is described in patent EP 1 338 707 B1.

The snap devices of the prior art, on one hand, solve the problem of the reliability and of a tight closure, however, on the other hand, they have further disadvantages.

A first disadvantage is due to the fact they are noisy: the snap mechanism emits a quite perceivable "click" when passing from the open configuration to the closed one and viceversa.

Then, there is a second disadvantage caused by the force required for actuating the device. Actually, the known devices are provided with rather stiff internal springs which, on one hand, always ensure to snappingly open/close them, however, on the other hand, beside increasing the cited actuating noise, they require a relatively high actuating force. In addition, the springs are oversized in order to enable to open the plug also in a maximum load condition, in other words when, after closing the plug and filled the container (a basin/sink or a bathtub), it is necessary to open the plug for draining the water. In such condition, it is necessary to overcome also the weight of the water column acting on the portion of the plug surface. Using springs of high stiffness contributes to increase the internal friction among the movable elements forming the snap mechanism and, therefore, contributes to rigidify and stiffen the plug actuation. This document EP1338707A1 is selected as representing the closest prior art for claim 1. The features mentioned in the preamble of claim 1 are disclosed in said document.

Further devices according to the prior art are disclosed in documents US 2010/024108 A1, US 3 220 695 A, US 5 421 552 A.

### SUMMARY OF THE INVENTION

Therefore, the need of solving the cited disadvantages and limitations regarding the prior art is felt.

Such need is met by an opening/closing device according to claim 1.

Dependent claims define possible advantageous embodiments of the invention.

### BRIEF DESCRIPTION OF THE DRAWINGS

Further characteristics and advantages of the present invention will be better understood from the hereinbelow description of preferred examples thereof which do not limit the implementation thereof, wherein:
Figures 1a-1b are cross-section lateral views, in an assembled configuration, of an opening/closing device according to possible embodiments of the present invention;
Figures 2a-2b are lateral views, in an assembled configuration, of an opening/closing device according to possible embodiments of the present invention;
Figures 3a-3b are perspective views of separated parts, taken from different angle-shots, of the opening/closing device in Figure 2a;
Figures 4a-4b are cross-section views, in a closed configuration, of the opening/closing device in Figure 2a;
Figure 5 is a cross-section view, in an open configuration, of the opening/closing device in Figure 2a;

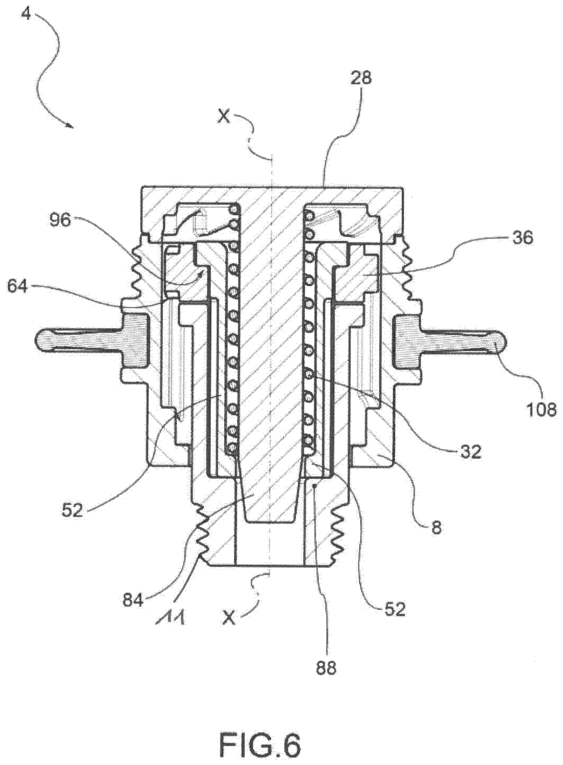

Figure 6 is a cross-section view, in a closed configuration, of the opening/closing device in Figure 2b;
Figures from 7 to 15 are partial cross-section perspective views of the opening/closing device, according to following steps of actuating the device itself.

Elements or parts of elements common to the described embodiments will be given in the following the same numeral references.

### DETAILED DESCRIPTION OF THE INVENTION

Referring to the cited figures, 4 generally indicates an opening/closing device for sanitary fittings according to the present invention.

The concept of an opening/closing device for sanitary fittings must be understood in a general way, in that it comprises, for example, devices for basins, sinks, receptors, bathtubs and similar.

The opening/closing device 4 for sanitary fittings comprises a body 8 associated or associable integrally to a closing plug 12. Moreover, the device 4 comprises a stem 16 preferably housed inside the body 8. The stem 16 is adapted to be stably and integrally coupled to a drain 18, in turn associated or associable to the sanitary fitting at the draining hole. The plug 12, according to the position thereof, is adapted to occlude the access to the drain 18, in order to prevent to drain the water from the sanitary fitting, or to leave unobstructed the access to the drain, enabling in this way to drain the water.

As an alternative, it is noted that device 4 can be associated to a valve or similar device, preferably, but not exclusively, for sanitary fittings. Therefore, the concept of the closing plug 12 must be considered in a general way, in that it comprises a device adapted to occlude an opening engaged by the drain 18. Also, the concept of a drain must be considered in a general term, in that is means an interface between the device 4 and opening that the device must be capable of selectively opening/occluding by said closing plug.

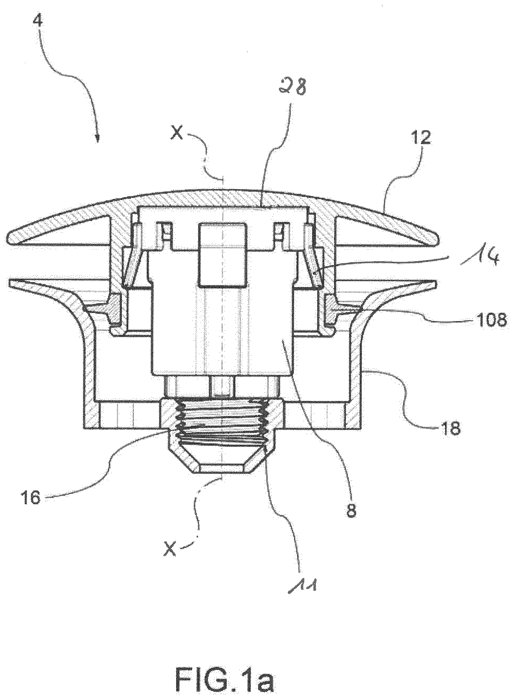

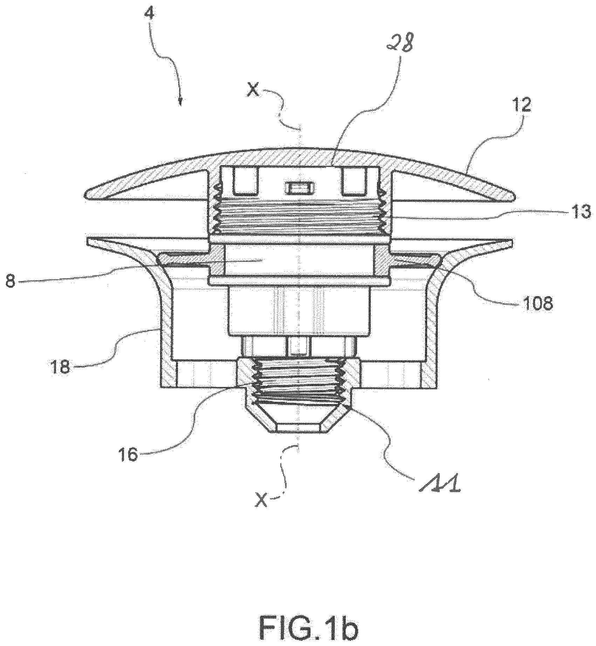

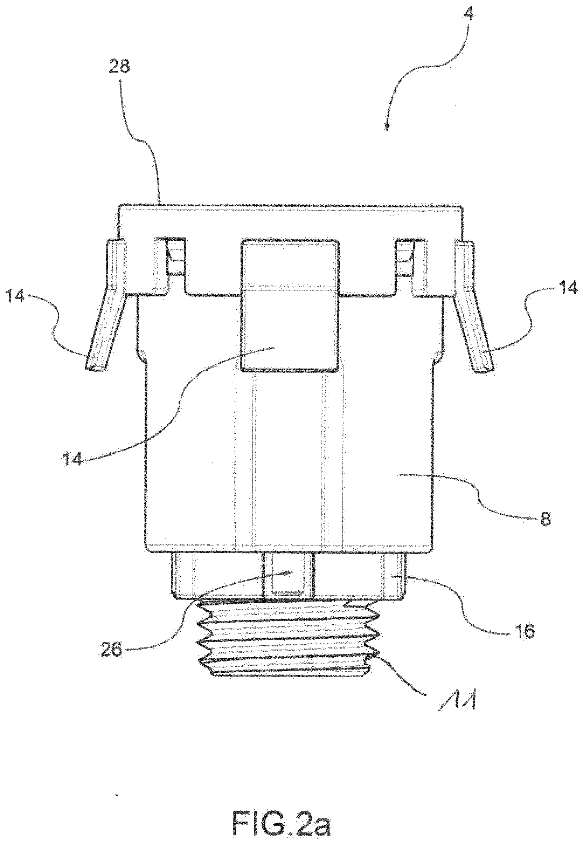

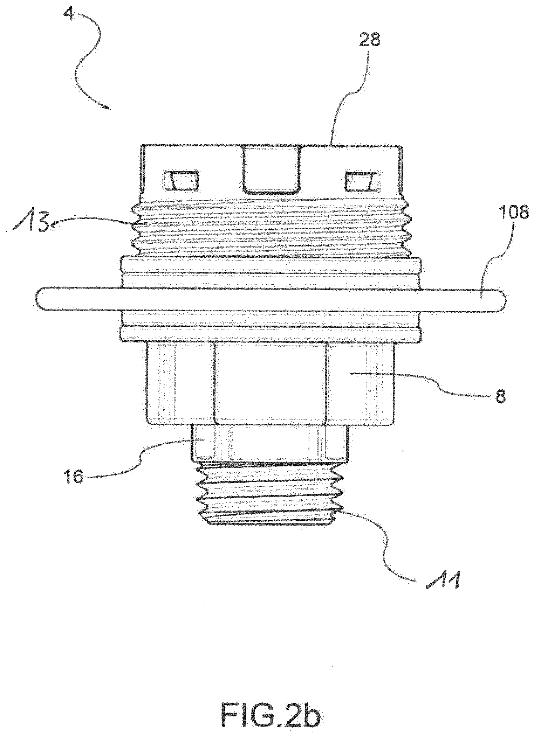

The body 8 is connected to the closing plug 12 by a variety of means, for example by a threaded connection 13 (in this regard, see the exemplifying embodiment illustrated in Figures 1b or 2b) or by snap-connecting means such as for example fins 14 (in this regard, see the exemplifying embodiment illustrated in Figures 1a and 2a) or as an alternative, by gluing or similar solutions (not shown in the figures).

In turn, the stem 16 can be associated to the drain 18 by a threaded connection 11 (according to the embodiments illustrated in the figures), by a snap connection or similar. Such last alternative variants are not illustrated in the figures.

The drain 18, as it is known, can be associated to a hole of a sanitary device such as for example a basin, sink, receptor, bathtub and similar for regulating the opening/closure of said hole and therefore enabling both to fill and empty such sanitary devices.

The body 8 is translatingly movable with respect to the stem 16 along an actuating axis X-X of the opening/closing device 4. The body 8, which, as said, preferably receives inside the stem 16, is for this reason advantageously hollow and comprises a lower opening 20, an upper opening 22, opposite to the lower opening 20 with reference to the direction determined by said actuating axis X-X. It is observed in the present invention and in the attached claims that the terms "lower" and "upper" refer to the normal conditions of use of the device 4 when is associated to a sanitary fitting.

Advantageously, the stem 16 and body 8 are coupled to each other so that the body 8 can translate with respect to the stem 16 along the actuating axis X-X, however it cannot rotate with respect to the stem 16 about the axis X-X itself.

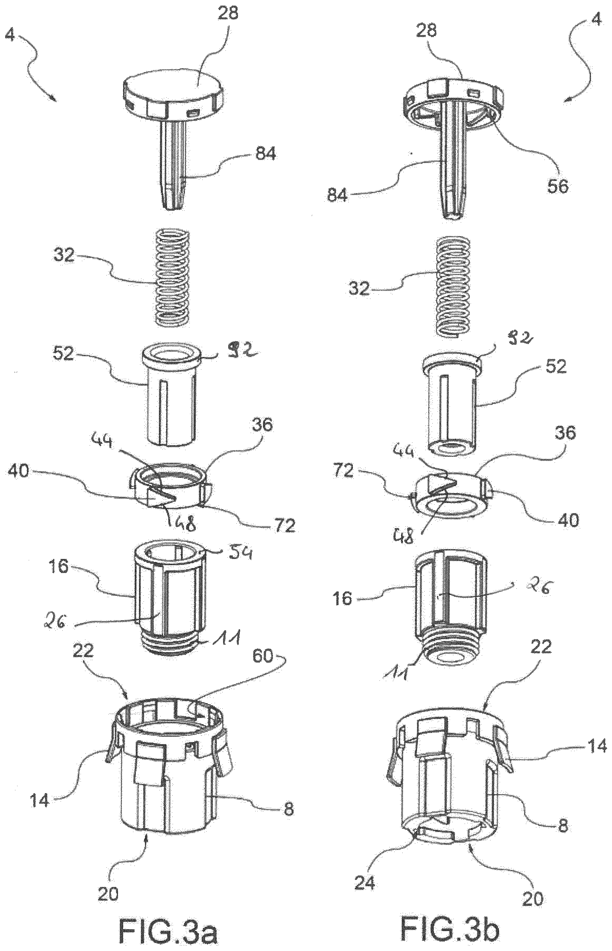

According to a possible embodiment, the body 8 and stem 16 are connectable to each other by a prismatic coupling obtained, for example, by an engagement in at least one groove 24 associated to the body 8 of a respective rib 26 associated to the stem 16 (or viceversa), the groove 24 and rib 26 are both parallel to said actuating axis X-X (see Figures 3a and 3b, for example).

Advantageously, the device 4 comprises a cover 28 associated to the body 8, for closing the upper opening 22 of this latter. The cover 28 is integral with the body 8 and, advantageously, forms by it an actuating member of the device 4, actuatable by an user, particularly by acting on the plug 12, for opening and closing the draining hole, as it will be explained in the following. As an alternative, it is observed that the actuating member could be configured differently with respect to what has been described.

Moreover, the device 4 comprises an actuating spring 32, such as for example a coil spring adapted to exert an elastic action, parallel to said actuating axis X-X, on the actuating member, particularly on the cover 28 and consequently on the body 8 integral to it. The actuating spring 32 is disposed and configured for biasing the cover 28 away from the stem 16, in other words in the upper direction of the device 4.

Further, the device 4 comprises a rotor 36 rotating about said actuating axis X-X and provided with thrusting elements 40 having an upper outline 44, facing the cover 28, and a lower outline 48 opposite to the upper outline 44. The rotor 36 is capable of rotating about the actuating axis X-X with respect to the stem 16. As an alternative, it can be translatingly integral with the stem 16 or can freely axially translates with respect to it. In order to obtain the above described coupling of the rotor 36 and stem 16, the device 4 preferably comprises a rotor support 52, which can be for example disposed inside and coaxially to said rotor 36 and preferably fixed, again inside, to the stem 16. As an alternative, it is observed the rotor support 52 can axially slide with respect to the stem 16, in this way axial translations of the rotor 36 with respect to the stem 16 itself are possible.

The actuating member comprises upper catches adapted to interact with the upper outline 44 of said thrusting elements 40 of the rotor 36, and lower catches adapted to interact with the lower outline 48 of said thrusting elements 40 of the rotor 36. More particularly, the cover 28 comprises upper catches 56 adapted to interact with the lower outline 44 of said thrusting elements 40 of the rotor 36. Moreover, the body 8 comprises, preferably inside, for example on an internal lateral wall 60, lower catches 64 adapted to interact with the lower outline 48 of said thrusting elements 40 of the rotor 36. As it will be shown, such lower catches 64 are configured for enabling the lower outline 48 of the thrusting elements 40 of the rotor 36 to slide to a stop condition determined by an abutment formed by the lower catches 64 themselves for the thrusting elements 40 of the rotor 36 in the closed configuration of the closing plug 12.

Further, the body 8 preferably comprises, again on said internal lateral wall 60, recesses 68 alternate between the lower catches 64, disposed at a lower height along the actuating axis X-X with respect to said lower catches 64. As it will be understood, such recesses 68 are adapted to house the thrusting elements 50 of the rotor 36 in the extended configuration of the actuating member, preferably corresponding to an open configuration of the closing plug 12.

According to an embodiment, the rotor 36 comprises a cylindrical disk provided, on an external lateral wall 72, with said thrusting elements 40. The thrusting elements 40 have a size and shape such to be capable of facing the lower catches 64 and stop recesses 68 of the body 8.

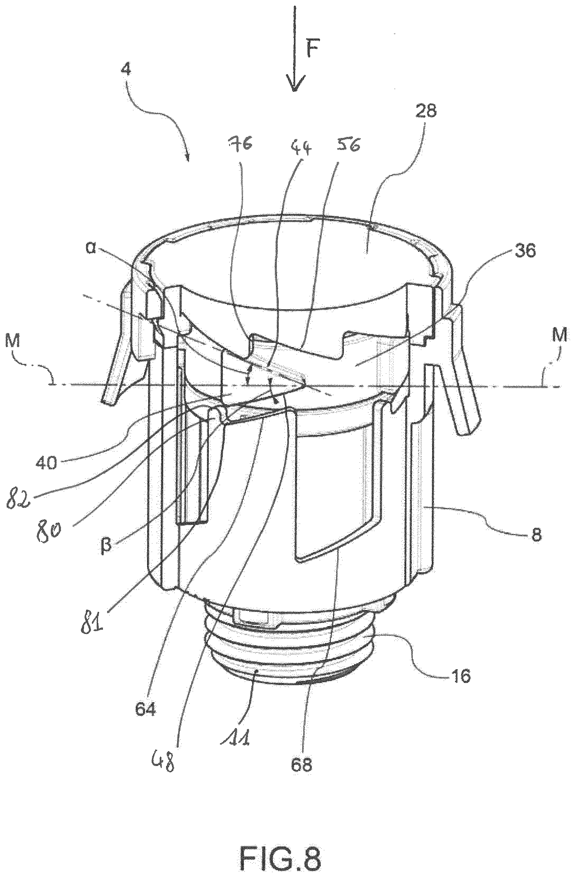

Advantageously, the lower outlines 44 of the thrusting elements 40 are countershaped to the upper catches 56 of the cover 28, in order to locally obtain threaded-type couplings, so that relative movements between the rotor 36 and cover 28 similar to the ones of a screw and nut screw are possible. Particularly, the lower outlines 44 of the thrusting elements 40 are shaped as helixes portions in order to define upper planes tangent to the helixes portion itself sloped with an oblique inclination angle α with respect to a median plane M-M normal to said actuating axis X-X (Figure 8). Moreover, the upper catches 56 of the cover 28 form upper abutments 76, alternate between two consecutive upper catches 56, adapted to obtain a stop to the reciprocal rotation between each thrusting element 40 and the cover 8 itself.

According to an embodiment, also the lower outlines 48 of the thrusting elements 40 are countershaped to the lower catches 64 of the body 8, in order to locally form threaded-type couplings. Particularly, they are shaped as helixes portions in order to define lower planes tangent to the helixes portion itself sloped with an oblique inclination angle β with respect to the median plane M-M normal to said actuating axis X-X (Figure 8). Preferably, the lower outlines 48 of the thrusting elements 40 are further countershaped also to the stop recesses 68 of the cover 28.

According to an embodiment, such upper and lower planes, as hereinbefore defined, exhibit inclination angles α, β, opposite to each other with respect to said median plane M-M normal to said actuating axis X-X, so that the thrusting elements 40 generally take a substantially triangular or trapezoidal configuration.

According to an embodiment, the lower catches 64 of the body 8 form lower abutments 80, alternated between a lower catch 64 and a following recess 68, having lateral abutment surfaces 81 adapted to form a stop to the reciprocal rotation between each thrusting element 40 and the body 8 itself. In other words, the lower abutments stop the rotation of the rotor 36 about said actuating axis X-X.

As shown, the cover 28 is disposed on the side of the upper opening 22 of the body 8 and is provided with the lower catches 56. Preferably, the cover 28 is integral with a central pin 84, coaxial to the body 8, said central pin 84 being inserted inside said actuating spring 32 and inside said rotor support 52. As an alternative, the pin 84 can be integrally connected to the cover 28 or can be made in one piece with it.

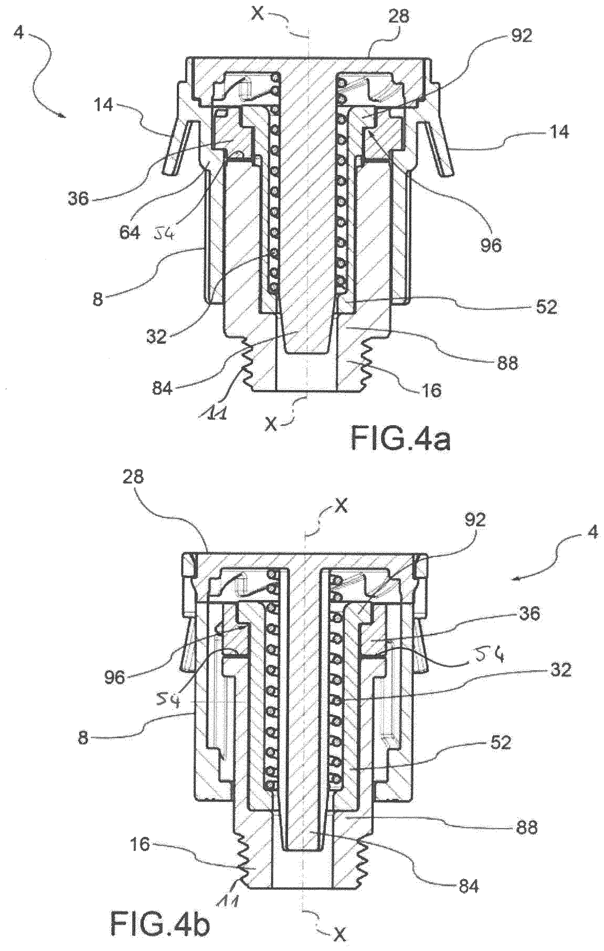

According to a possible embodiment, in an assembled condition of the device 4, the rotor support 52 abuts on a narrowing 88 of the stem 16, in which the rotor support 52 comprises a perimetral edge 92 axially constraining the rotor 36 between the rotor support 52 and stem 16, on which the rotor 36 abuts in correspondence of an upper surface 54 (Figures 4a and 4b).

According to an embodiment, the rotor support 42 is configured so that between said perimetral edge 92 and rotor 36, there is an axial clearance 96, when the rotor support 52 abuts on said narrowing 88 of the stem 16.

As shown, the body 8 is integrally associated to the closing plug 12, and the stem 16 is integrally associated to the drain 18, adapted to be occluded by said closing plug 12.

The tight occlusion of the drain 18 is preferably obtained by providing a seal 108.

According to an embodiment, said seal 108 is associated to the closing plug 12 and is disposed perimetrally to a lateral wall of said closing plug 12 so that can abut on the drain 18 and tightly close it (Figure 1a).

According to a further alternative embodiment, a seal 108 adapted to tightly occlude the drain 18, in a closed configuration of the opening/closing device 4 and of the respective closing plug 12 (Figure 1b) is coaxially associated to the outside of the body 8.

It is observed that in the retracted configuration of the actuating member, in other words preferably in the closed configuration of the device 4 (see Figures 4a and 4b, for example), the actuating spring 32 is compressed, however it cannot upwardly thrust the plug 12, and the plug itself is disposed on the drain in order to squeeze the seal 108 and obtain a tight sealing, in order to prevent the water from flowing down through the drain itself (see Figure 1a, for example).

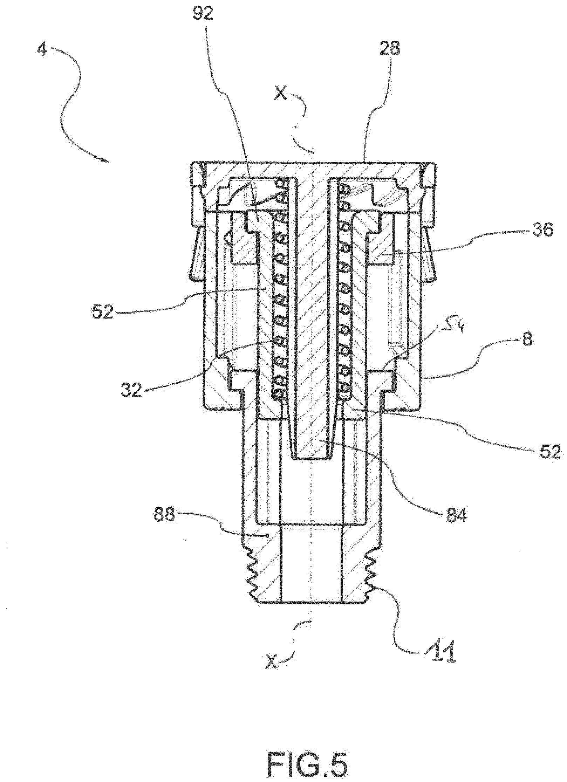

Moreover, in an extended configuration of the actuating member preferably corresponding to an open configuration of the plug 12, the actuating spring 32 is substantially uncompressed (with the exception of the compression action exerted by the weight of the plug 12 and possibly of the residual water column) in order to take the body 8 and therefore the plug to a maximum distance condition from the stem 16 and drain 18, with respect to said actuating axis X-X (such condition is illustrated in Figure 5, for example).

In this way, the actuating spring 32 extends, in other words is disposed in an extracted configuration, and raises the closing plug 12 in order to avoid a contact between the seal 108 and drain 18 and to enable the water to flow down through the drain 18.

The operation of an opening/closing device according to the present invention will be now described. It is observed that, in the present description, the closed configuration of the plug is exemplifyingly considered as the retracted configuration of the actuating member and that the open configuration of the plug corresponds to the extended configuration of the actuating member. However, according to a further non-illustrated variant, it is also possible that to the extended configuration of the actuating member corresponds the closed configuration of the plug, and that to the retracted configuration of the actuating member corresponds the open configuration of the plug.

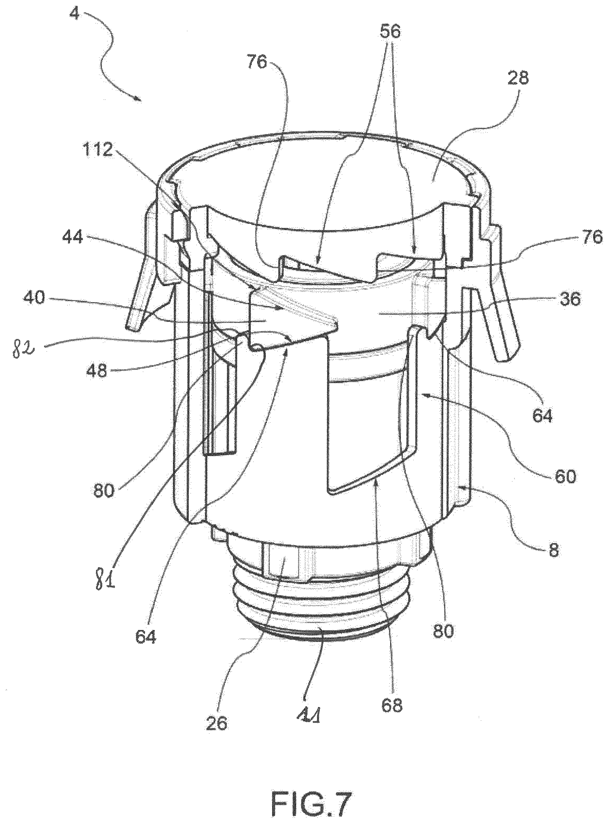

Particularly, it is assumed from a closed configuration of the plug 12 and therefore of the body 8, illustrated in Figure 7 for example. In such configuration, the actuating member (body 8 + cover 28) is disposed in a first equilibrium position. Actually, the actuating spring 32 tends to take the actuating member to a more extended position, in other words away from the stem 16, however such movement is prevented since the lower outlines 48 of the thrusting elements 40 of the rotor 36 engage the lower catches 64 of the body 8, and therefore cannot move upwardly. However, lowering the actuating member is prevented by the thrust of the actuating spring itself.

Figure 7 shows, in such configuration, that there is no direct contact between the upper outlines 44 of the thrusting elements 40 and the upper catches 56 of the cover 28: particularly there is a clearance 112 between the upper outlines 44 of the thrusting elements 40 and the upper catches 56 of the cover 28. In this way, when the plug 12 is pressed by a hand or a finger of a user, in order to pass from the closed configuration to the open one, the user is not required to overcome any friction force between the upper outlines 44 of the thrusting elements 40, and the upper catches 56 of the cover 28.

Actually, in the first thrusting step (see in particular the arrow F indicating the thrusting force exerted by the user in Figure 8), in other words when the plug is lowered, the body 8 (and cover 28) lowers along the actuating axis X-X. Therefore, the lower outlines 48 of the thrusting elements 40 of the rotor 36 disengage the lower catches 64 of the body 8.

Moreover, during the lowering stroke of the plug 12 and body 8, the upper outlines 44 of the thrusting elements 40 contact the upper catches 56 of the cover 28: such contact causes a thrust determining a rotation of the rotor 36 about the actuating axis X-X. A further consequence of such rotation is a relative sliding between the upper outlines 44 and lower outlines 56.

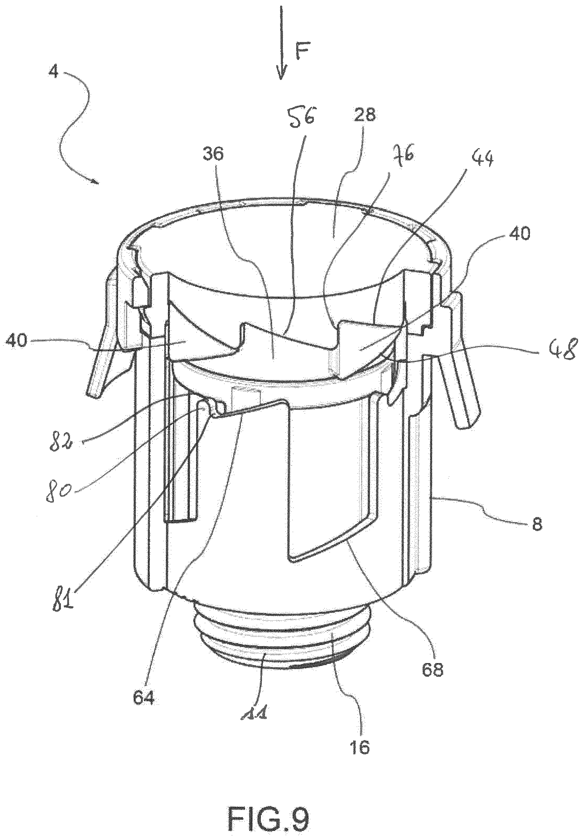

By continuing to exert a pressure on the plug 12 (arrow F in Figure 9), the body 8 continues lowering, consequently the rotor 36 further rotates until a stop condition due to the abutment between the thrusting elements 40 and upper abutment 76 of the cover 28 is reached. In such intermediate position, the actuating member is in a stop configuration of the actuating member. Therefore, by continuing to press the plug 12, this latter will not be further lowered.

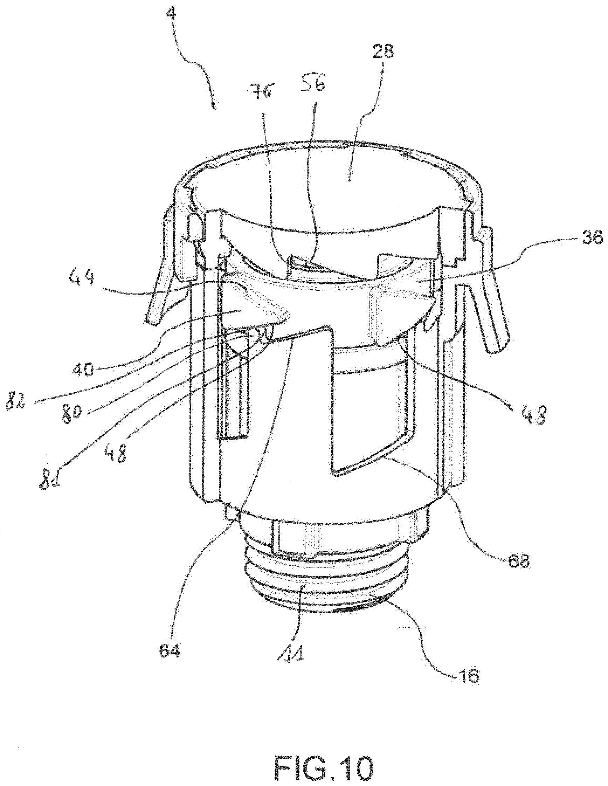

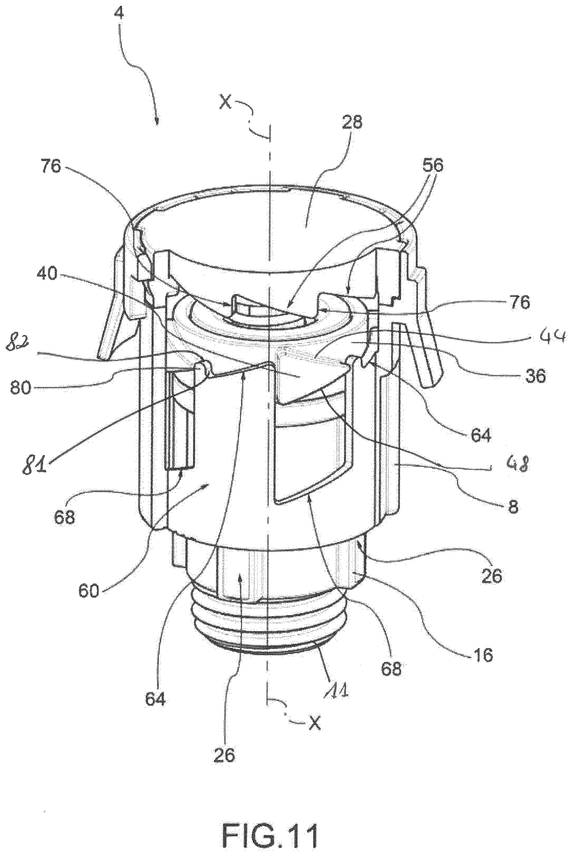

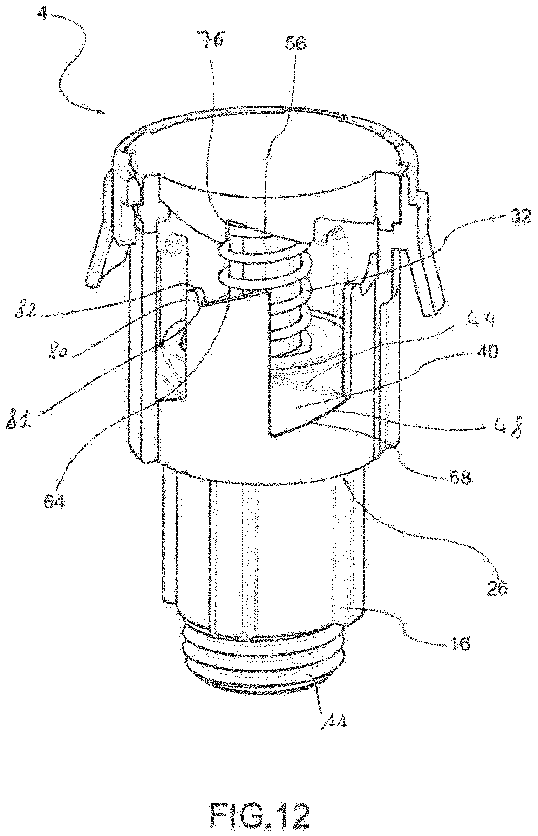

Consequently, if the pressing action on the plug 12 is interrupted by the action of the actuating spring 32, the body 8 and cover 28 start raising along the actuating axis X-X (Figure 10). Therefore, the rotor 36 disengages the upper catches 56 of the cover 28 and contacts the lower abutments 80 of the body 8. Particularly, preferably, the lower outlines 48 of the thrusting elements 40 at the beginning slide on the lower surfaces 82 of the lower abutments 80 and then, due to a further raising of the body 8, the thrusting elements 40 are positioned in the stop recesses 80 of this latter (Figure 11) until they completely engage them (Figure 12). In such position, the actuating member is again placed in an equilibrium condition. Such configuration corresponds to the maximum upward stroke condition of the plug which therefore is open.

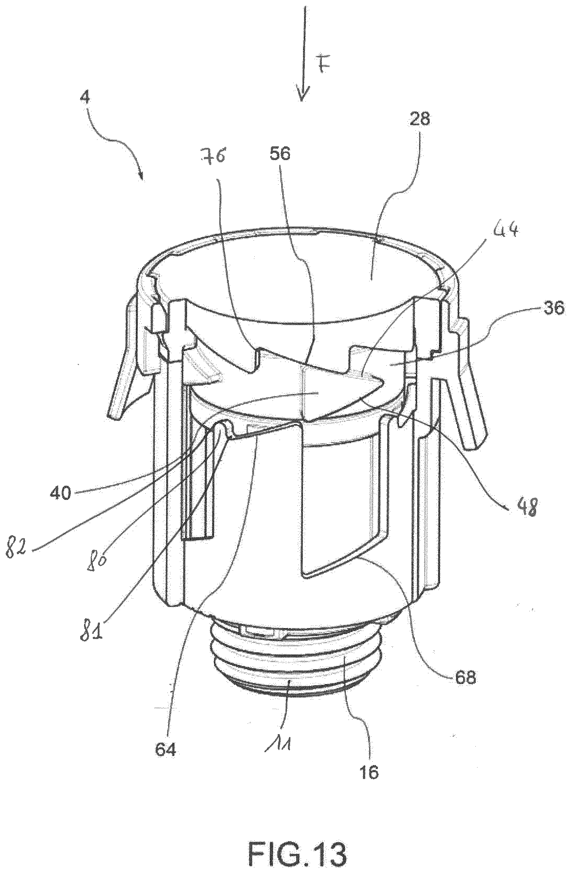

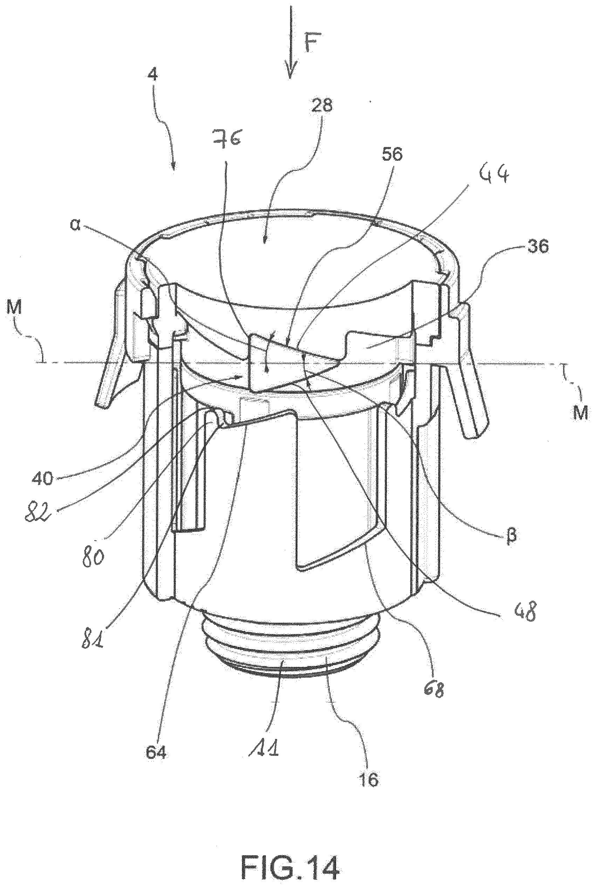

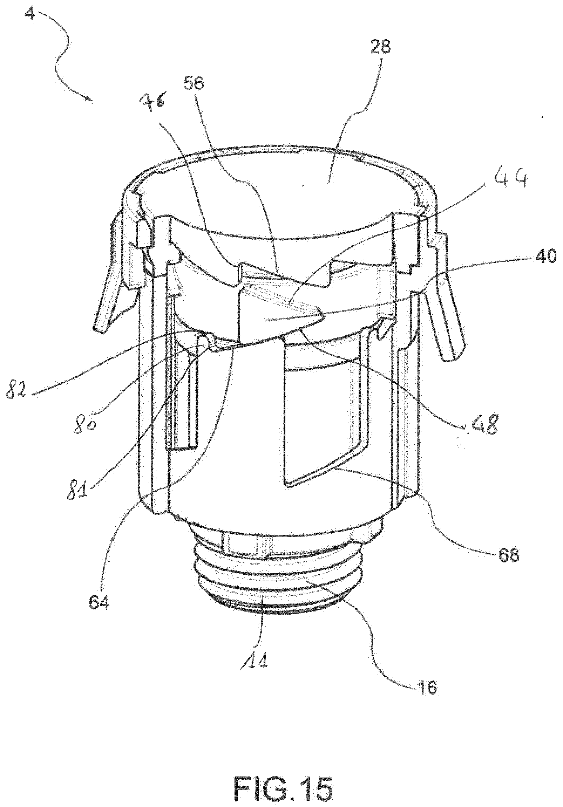

The following step of closing the plug, starting from the maximum open step (Figure 12), comprises the opposite steps. Particularly, by pressing the plug 12 (arrow F in Figure 13) the body 8 and cover 28 are again lowered, consequently the thrusting elements 40 of the rotor 36 disengage the recesses 68 of the body 8 until the lower outlines 44 of the thrusting elements 40 of the rotor 36 again engage the upper catches 56 of the cover 28 (Figure 13). By continuing pressing the plug 12, the upper outlines 44 of the thrusting elements 40 of the rotor 36 slide along the upper catches 56 of the cover 28, due to the rotation of the rotor 36 until a new stop condition is obtained when the thrusting elements 44 abut on the abutments 76 of the upper catches 56 of the cover 28 (Figure 14). Therefore, the actuating member is again in the stop configuration and it is impossible to lower it even though the plug 12 is further pressed. Therefore, by releasing the plug 12, due to the effect of the action of the actuating spring 32, the body 8 and cover 28 raise again (Figure 15). Consequently, the rotor 36 disengages the upper catches 56 of the cover 28 and engages the lower catches 64 of the body 8. Due to the effect of the actuating spring 38, the body 8 and cover 28 continue raising, causing the lower outline 48 of the thrusting elements 44 of the rotor 36 to slide along the lower catches 64 of the body 8 and the rotor 36 to rotate, until the thrusting elements 40 abut on the lateral abutment surfaces 81 of the lower abutments 80 of the body 8. Such condition again corresponds to the closed condition of the plug 12 (Figure 7).

Moreover, it is observed in the closed configuration illustrated in Figure 7, that if the rotor support 52 has the possibility to slide with respect to the stem 16, it is possible to temporarily open the plug 12 by simply raising it. Such action causes the actuating member to raise which, in turn, drags the rotor. If the plug 12 is released, this falls and closes again, due to the weight thereof. Such possible additional operation enables to manually open the plug according to a mode different from the described one.

As it can be appreciated from what has been described, the opening/closing device according to the invention requires an actuating force smaller than the one of the snap devices of the prior art. Actually, as shown, when the device is in a closed condition and must be opened, following a manual pressure on the plug, there is no starting friction on the thrusting elements of the rotor and on the upper catches of the cover.

In this way, the spring must be sized for overcoming the weight of the plug and the water column acting on the mushroom portion of the plug, and not also the friction force among the reciprocally sliding parts of the mechanism, as in the prior art solutions.

Therefore, it is possible to use a less strong spring, in other words having a smaller elastic constant, which consequently is softer and easier to be actuated by a user. A softer spring, besides being more comfortable to be actuated, is also quieter than the solutions of the prior art.

Further, the opening/closing device according to the invention is quieter than the snap devices of the prior art. Actually, when the mechanism is actuated it is not perceived any "click".

Therefore, the actuating device of the present invention can be particularly appreciated by the users because is smooth and quite when is actuated.

Obviously, the smoothness and quietness are not a detriment to the reliability of the device which ensures an optimal operation also after years, despite the device operates in an adverse environment since is subjected to water, dirt and calcareous scales. The term reliability means that the device neither jams nor rigidifies when used; further in closed conditions, the mechanism always ensures a suitable tight sealing of the drain.

Advantageously, the mechanism portion integral with the plug does not rotate when passing from the open condition to the closed one and viceversa: in this way attritions between the seal and the stationary part of the drain are prevented. Such attritions, over the time, would compromise the seal tightness and enable the water to leak also when the plug is closed.

Moreover, when the plug shows a trademark, for example of a manufacturer, it is avoided an unpleasant or unattractive situation wherein the trademark can rotate when the plug is operated and therefore is prevented a misalignment of the same with the stationary part of the sanitary device.

A person skilled in the art, in order to meet contingent and specific needs, can introduce several modifications and variants, still all falling in the invention scope as defined in the attached claims, to the embodiments of the described device.

## Claims

1. Opening and closing device (4) for sanitary fittings, comprising:
- an actuating member (8, 28) integrally associable to a closing plug (12);
- a stem (16) integrally connectable to a drain (18) adapted to be closed by said plug (12), said actuating member (8, 28) being movable with respect to the stem (16) along an actuating axis (X-X) of the opening and closing device (4) between a first equilibrium position, corresponding to a retracted configuration of the actuating member, and a second equilibrium position, corresponding to an extended configuration of the actuating member, by passing through an intermediate position;
- an actuating spring (32) adapted to bias said actuating member (8, 28) towards said second equilibrium position;
**characterized in that** said intermediate position corresponds to a stop configuration of the actuating member, and **in that** said opening and closing device (4) further comprises:
- a rotor (36) rotatable around said actuating axis (X-X) and comprising thrusting elements (40) having an upper outline (44) and a lower outline (48) opposite to the upper outline (44),
wherein the actuating member (8, 28) comprises upper catches (56) adapted to interact with the upper outline (44) of said thrusting elements (40) of the rotor (36), and further lower catches (64) and recesses (68), at a level different from said lower catches (64), adapted to interact with the lower outline (48) of said thrusting elements (40) of the rotor (36) in order to generate thrusts suitable for rotating the rotor (36) around the actuating axis (X-X) due to said interactions,
wherein:
- in the retracted configuration of the actuating member, the lower outline (48) of the thrusting element (40) engages the lower catches (64) of the actuating member;
- in the extended configuration of the actuating member, the lower outline (48) of the thrusting elements (40) engages the recesses (68) of the actuating member;
- in the stop configuration of the actuating member, the upper outline (44) of the thrusting element (40) engages the upper catches (56) of the actuating member.

2. Opening and closing device (4) according to claim 1, wherein:
- the lower outline (48) of the thrusting elements (40), when switching from the retracted configuration to the stop configuration of the actuating member, disengages the lower catches (64) of the actuating member, and the upper outline (44) of the thrusting elements (40) engages the upper catches (56) of the actuating member by sliding along these due to the rotation of the rotor (36);
- the upper outline (44) of the thrusting elements (40), when switching from the stop configuration to the extended configuration of the actuating member, disengages the upper catches (56) of the actuating member, and the lower outline (48) of the thrusting elements (40) engages the recesses (68) of the actuating member by sliding along said lower catches (64) and/or along said recesses (68) due to the rotation of the rotor (36);
- the lower outline (48) of the thrusting elements (40), when switching from the extended configuration to the stop configuration of the actuating member, disengages the recesses (68) of the actuating member, and the upper outline (44) of the thrusting elements (40) engages the upper catches (56) of the actuating member by sliding along these due to the rotation of the rotor (36);
- the upper outline (44) of the thrusting elements (40), when switching from the stop configuration to the extended configuration of the actuating member, disengages the upper catches (56) of the actuating member, and the lower outline (48) of the thrusting elements (40) engages the lower catches (64) of the actuating member by sliding along these due to the rotation of the rotor (36).

3. Opening and closing device (4) according to claim 1 or 2, wherein said retracted configuration of the actuating member corresponds to a plug (12) closed configuration, wherein said plug (12) under operative conditions of the device (4), closes said drain (18), and said extended configuration of the actuating member corresponds to a plug (12) opened configuration, wherein said plug (12), under operative conditions of the device (4), holds open said drain (18).

4. Opening and closing device (4) according to any of the preceding claims, wherein said actuating member comprises a body (8) integrally associated or associable to the closing plug (12) and translatingly slideable along said actuating axis (X-X), the body (8) comprising a lower opening (20), facing the stem (16) and crossed by this latter, and an upper opening (22), opposite to the lower opening (20) with respect to said actuating axis (X-X), and a cover (28) closingly associated to the upper opening (22) of said body (8), wherein said upper catches (56) are associated to said cover (28) and said lower catches (64) and recesses (68) are associated to said body (8).

5. Opening and closing device (4) according to any of the preceding claims, comprising a rotor support (52) integral with said stem (16) or slideable along said actuating axis (X-X) with respect to it, placed inside and coaxially with said rotor (36) and shaped in order to rotatively couple, around said actuating axis (X-X), the rotor (36) and stem (16).

6. Opening and closing device (4) according to any of the preceding claims, wherein the rotor (36) has a cylindrical shape and is provided, on one external lateral wall (72) thereof, with said thrusting elements (40).

7. Opening and closing device (4) according to any of the preceding claims, wherein the upper outlines (44) of the thrusting elements (40) are countershaped to the upper catches (56) of the actuating member, and are shaped as portions of helixes, in order to define upper planes tangent to said helixes portions sloped with an oblique angle of inclination (α) with respect to a median plane (M-M) normal to said actuating axis (X-X).

8. Opening and closing device (4) according to any of the preceding claims, wherein said upper catches (56) of the actuating member comprise upper abutments (76) adapted to stop a reciprocal sliding movement between the upper outlines (44) of each thrusting element (40) and the upper catches (56) themselves.

9. Opening and closing device (4) according to any of the preceding claims, wherein the lower outlines (48) of the thrusting elements (40) are countershaped to the lower catches (64) and recesses (68) of the actuating member, and are shaped as portions of helixes, in order to define lower planes tangent to said helixes portions sloped with an oblique angle of inclination (β) with respect to a median plane (M-M) normal to said actuating axis (X-X).

10. Opening and closing device (4) according to claims 7 and 9, wherein said upper and lower planes form angles of inclination (α, β) opposite to each other with respect to said median plane (M-M) normal to said actuating axis (X-X), so that the thrusting elements (40) generally take a substantially triangular or trapezoidal configuration.

11. Opening and closing device (4) according to any of the preceding claims, wherein the lower catches (64) of the actuating member comprise lower abutments (80), each lower abutment being interposed between a lower catch (64) and a following recess (68), and having lateral abutment surfaces (81) adapted to implement a stop to the reciprocal sliding movement between the lower outlines (48) of each thrusting element (40) and the lower catches (64) themselves.

12. Opening and closing device (4) according to any of the preceding claims when dependent on claims 4 and 5, wherein the cover (28) is integrally associated to a central pin (84), coaxial with the body (8), said central pin (84) being inserted inside said actuating spring (32) and inside said rotor support (52).

13. Opening and closing device (4) according to the preceding claim, wherein the rotor support (52) abuts on a narrowing (88) of the stem (16), wherein the rotor support (52) comprises a perimetral edge (92) axially constraining the rotor (36) between the rotor support (52) and stem (16).

14. Opening and closing device (4) according to the preceding claim, wherein the rotor support (52) is configured so that between said perimetral edge (92) and the rotor (36) there is an axial clearance (96), when the rotor support (52) abuts on said stem (16) narrowing (88).

## Patentansprüche

1. Öffnungs- und Schließvorrichtung (4) für Sanitärarmaturen, umfassend:
- ein Betätigungselement (8, 28), das einem Verschlussstopfen (12) einstückig zugeordnet werden kann;
- einen Schaft (16), der einstückig mit einem Ablauf (18) verbindbar ist, der dazu ausgelegt ist, mit dem Stopfen (12) geschlossen zu werden, wobei das Betätigungselement (8, 28) in Bezug auf den Schaft (16) entlang einer Betätigungsachse (X-X) der Öffnungs- und Schließvorrichtung (4) zwischen einer ersten Gleichgewichtsposition, die einer zurückgezogenen Konfiguration des Betätigungselements entspricht, und einer zweiten Gleichgewichtsposition, die einer ausgefahrenen Konfiguration des Betätigungselements entspricht, per Durchgang durch eine Zwischenposition bewegbar ist;
- eine Betätigungsfeder (32), die geeignet ist, das Betätigungselement (8, 28) in Richtung der zweiten Gleichgewichtsposition zu belasten;
**dadurch gekennzeichnet, dass** die Zwischenposition einer Anschlagskonfiguration des Betätigungselements entspricht **und dass** die Öffnungs- und Schließvorrichtung (4) ferner umfasst:
- einen Rotor (36), der um die Betätigungsachse (X-X) drehbar ist und Schubelemente (40) mit einer oberen Umrandung (44) und einer der oberen Umrandung (44) gegenüber angeordneten unteren Umrandung (48) aufweist,
wobei das Betätigungselement (8, 28) obere Rasten (56) aufweist, die geeignet sind, mit der oberen Umrandung (44) der Schubelemente (40) des Rotors (36) zusammenzuwirken, und ferner untere Rasten (64) und Aussparungen (68) auf einer anderen Ebene als die unteren Rasten (64), die geeignet sind, mit der unteren Umrandung (48) der Schubelemente (40) des Rotors (36) zusammenzuwirken, um Schubkräfte zu erzeugen, die geeignet sind, den Rotor (36) aufgrund der Wechselwirkungen um die Betätigungsachse (X-X) zu drehen,
wobei gilt:
- in der zurückgezogenen Konfiguration des Betätigungselements ist die untere Umrandung (48) des Schubelements (40) mit den unteren Rasten (64) des Betätigungselementes in Eingriff;
- in der ausgefahrenen Konfiguration des Betätigungselements ist die untere Umrandung (48) der Schubelemente (40) mit den Aussparungen (68) des Betätigungselements in Eingriff;
- in der Anschlagskonfiguration des Betätigungselements ist die obere Umrandung (44) des Schubelements (40) mit den oberen Rasten (56) des Betätigungselements in Eingriff.

2. Öffnungs- und Schließvorrichtung (4) nach Anspruch 1, wobei:
- die untere Umrandung (48) der Schubelemente (40) beim Umschalten von der zurückgezogenen Konfiguration in die Anschlagskonfiguration des Betätigungselements die unteren Rasten (64) des Betätigungselements löst und die obere Umrandung (44) der Schubelemente (40) in die oberen Rasten (56) des Betätigungselements durch Gleiten entlang dieser infolge der Drehung des Rotors (36) eingreift;
- die obere Umrandung (44) der Schubelemente (40) beim Umschalten von der Anschlagskonfiguration in die ausgefahrene Konfiguration des Betätigungselements die oberen Rasten (56) des Betätigungselements löst und die untere Umrandung (48) der Schubelemente (40) in die Aussparungen (68) des Betätigungselements eingreift, indem sie infolge der Drehung des Rotors (36) entlang der unteren Rasten (64) und/oder entlang der Aussparungen (68) gleitet;
- die untere Umrandung (48) der Schubelemente (40) beim Umschalten von der ausgefahrenen Konfiguration in die Anschlagskonfiguration des Betätigungselements die Aussparungen (68) des Betätigungselements löst und die obere Umrandung (44) der Schubelemente (40) in die oberen Rasten (56) des Betätigungselements eingreift, indem sie infolge der Drehung des Rotors (36) entlang dieser gleitet;
- die obere Umrandung (44) der Schubelemente (40) beim Umschalten von der Anschlagskonfiguration in die ausgefahrene Konfiguration des Betätigungselements die oberen Rasten (56) des Betätigungselements löst und die untere Umrandung (48) der Schubelemente (40) in die unteren Rasten (64) des Betätigungselements durch Gleiten entlang dieser infolge der Drehung des Rotors (36) eingreift.

3. Öffnungs- und Schließvorrichtung (4) nach Anspruch 1 oder 2, wobei die zurückgezogene Konfiguration des Betätigungselements einer per Stopfen (12) geschlossenen Konfiguration entspricht, wobei der Stopfen (12) unter Betriebsbedingungen der Vorrichtung (4) den Ablauf (18) verschließt und die ausgefahrene Konfiguration des Betätigungselements einer Konfiguration mit geöffnetem Stopfen (12) entspricht, wobei der Stopfen (12) unter Betriebsbedingungen der Vorrichtung (4) den Ablauf (18) offen hält.

4. Öffnungs- und Schließvorrichtung (4) nach einem der vorstehenden Ansprüche, wobei das Betätigungselement einen Körper (8) aufweist, der dem Verschlussstopfen (12) einstückig zugeordnet oder zuordenbar ist und entlang der Betätigungsachse (X-X) translatorisch verschiebbar ist, wobei der Körper (8) eine untere Öffnung (20) aufweist, die dem Schaft (16) zugewandt ist und von diesem gekreuzt wird, und eine obere Öffnung (22), die der unteren Öffnung (20) in Bezug auf die Betätigungsachse (X-X) gegenüberliegt, und eine Abdeckung (28), die der oberen Öffnung (22) des Körpers (8) schließend zugeordnet ist, wobei die oberen Rasten (56) der Abdeckung (28) und die unteren Rasten (64) und die Aussparungen (68) dem Körper (8) zugeordnet sind.

5. Öffnungs- und Schließvorrichtung (4) nach einem der vorstehenden Ansprüche, umfassend einen Rotorträger (52), der mit dem Schaft (16) einstückig angeordnet oder entlang der Betätigungsachse (X-X) in Bezug auf diesen verschiebbar ist, wobei er innerhalb und koaxial mit dem Rotor (36) angeordnet und so geformt ist, dass er den Rotor (36) und den Schaft (16) um die Betätigungsachse (X-X) drehbar koppelt.

6. Öffnungs- und Schließvorrichtung (4) nach einem der vorstehenden Ansprüche, wobei der Rotor (36) eine zylindrische Form aufweist und an einer seiner äußeren Seitenwände (72) mit den Schubelementen (40) versehen ist.

7. Öffnungs- und Schließvorrichtung (4) nach einem der vorstehenden Ansprüche, wobei die oberen Umrandungen (44) der Schubelemente (40) zu den oberen Rasten (56) des Betätigungselements gegengeformt sind und als Abschnitte von Spiralen geformt sind, um obere Ebenen zu definieren, die tangential zu den Spiralenabschnitten verlaufen und in einem schrägen Neigungswinkel (α) in Bezug auf eine Mittelebene (M-M) senkrecht zu der Betätigungsachse (X-X) geneigt sind.

8. Öffnungs- und Schließvorrichtung (4) nach einem der vorstehenden Ansprüche, wobei die oberen Rasten (56) des Betätigungselements obere Widerlager (76) aufweisen, die geeignet sind, eine reziproke Gleitbewegung zwischen den oberen Umrandungen (44) jedes Schubelements (40) und den oberen Rasten (56) selbst zu stoppen.

9. Öffnungs- und Schließvorrichtung (4) nach einem der vorstehenden Ansprüche, wobei die unteren Umrandungen (48) der Schubelemente (40) zu den unteren Rasten (64) und Aussparungen (68) des Betätigungselements gegengeformt sind und als Abschnitte von Spiralen geformt sind, um untere Ebenen zu definieren, die tangential zu den Spiralenabschnitten verlaufen und in einem schrägen Neigungswinkel (β) in Bezug auf eine Mittelebene (M-M) senkrecht zu der Betätigungsachse (X-X) geneigt sind.

10. Öffnungs- und Schließvorrichtung (4) nach den Ansprüchen 7 und 9, wobei die obere und die untere Ebene einander gegenüberliegende Neigungswinkel (α, β) mit Bezug auf die Mittelebene (M-M) senkrecht zu der Betätigungsachse (X-X) bilden, so dass die Schubelemente (40) im Allgemeinen eine im Wesentlichen dreieckige oder trapezförmige Konfiguration annehmen.

11. Öffnungs- und Schließvorrichtung (4) nach einem der vorstehenden Ansprüche, wobei die unteren Rasten (64) des Betätigungselements untere Widerlager (80) aufweisen, wobei jedes untere Widerlager zwischen einer unteren Raste (64) und einer nachfolgenden Aussparung (68) angeordnet ist und seitliche Widerlagerflächen (81) aufweist, die geeignet sind, eine Anhaltung der reziproken Gleitbewegung zwischen den unteren Umrandungen (48) jedes Schubelements (40) und den unteren Rasten (64) selbst auszuführen.

12. Öffnungs- und Schließvorrichtung (4) nach einem der vorstehenden Ansprüche in Abhängigkeit von den Ansprüchen 4 und 5, wobei die Abdeckung (28) einem zentralen Stift (84) koaxial zum Körper (8) einstückig zugeordnet ist, wobei der zentrale Stift (84) innerhalb der Betätigungsfeder (32) und innerhalb des Rotorträgers (52) eingesetzt ist.

13. Öffnungs- und Schließvorrichtung (4) nach dem vorstehenden Anspruch, wobei der Rotorträger (52) an einer Verengung (88) des Schafts (16) anliegt, wobei der Rotorträger (52) eine Außenumfangskante (92) aufweist, die den Rotor (36) zwischen dem Rotorträger (52) und dem Schaft (16) axial begrenzt.

14. Öffnungs- und Schließvorrichtung (4) nach dem vorstehenden Anspruch, wobei der Rotorträger (52) dazu ausgelegt ist, dass zwischen der Umfangskante (92) und dem Rotor (36) ein Axialspiel (96) vorhanden ist, wenn der Rotorträger (52) an der Verengung (88) des Schafts (16) anliegt.

## Revendications

1. Dispositif d'ouverture et de fermeture (4), destiné à des installations sanitaires, comprenant :
- un élément d'actionnement (8, 28) pouvant être associé solidairement à un bouchon de fermeture (12) ;
- une tige (16) pouvant être reliée solidairement à un drain (18) adapté pour être fermé par ledit bouchon (12), ledit élément d'actionnement (8, 28) étant mobile par rapport à la tige (16) le long d'un axe d'actionnement (X-X) du dispositif d'ouverture et de fermeture (4) entre une première position d'équilibre, correspondant à une configuration rétractée de l'élément d'actionnement, et une deuxième position d'équilibre, correspondant à une configuration étendue de l'élément d'actionnement, en passant par une position intermédiaire ;
- un ressort d'actionnement (32) adapté pour pousser ledit élément d'actionnement (8, 28) vers ladite deuxième position d'équilibre ;
**caractérisé en ce que** ladite position intermédiaire correspond à une configuration d'arrêt de l'élément d'actionnement, et **en ce que** ledit dispositif d'ouverture et de fermeture (4) comprend en outre :
- un rotor (36) pouvant tourner sur ledit axe d'actionnement (X-X) et comprenant des éléments de poussée (40) présentant un contour supérieur (44) et un contour inférieur (48) opposé au contour supérieur (44),
l'élément d'actionnement (8, 28) comprenant des éléments de blocage supérieurs (56) adaptés pour coopérer avec le contour supérieur (44) desdits éléments de poussée (40) du rotor (36), et en outre des éléments de blocage inférieurs (64) et des évidements (68), à un niveau différent desdits éléments de blocage inférieurs (64), adaptés pour coopérer avec le contour inférieur (48) desdits éléments de poussée (40) du rotor (36) afin de générer des poussées adaptées pour faire tourner le rotor (36) sur l'axe d'actionnement (X-X) du fait desdites coopérations,
dispositif d'ouverture et de fermeture dans lequel :
- lorsque l'élément d'actionnement est dans la configuration rétractée, le contour inférieur (48) de l'élément de poussée (40) s'engage avec les éléments de blocage inférieurs (64) de l'élément d'actionnement ;
- lorsque l'élément d'actionnement est dans la configuration étendue, le contour inférieur (48) des éléments de poussée (40) s'engage dans les évidements (68) de l'élément d'actionnement ;
- lorsque l'élément d'actionnement est dans la configuration d'arrêt, le contour supérieur (44) de l'élément de poussée (40) s'engage avec les éléments de blocage supérieurs (56) de l'élément d'actionnement.

2. Dispositif d'ouverture et de fermeture (4) selon la revendication 1, dans lequel :
- le contour inférieur (48) des éléments de poussée (40), lorsque l'élément d'actionnement passe de la configuration rétractée à la configuration d'arrêt, se désengage des éléments de blocage inférieurs (64) de l'élément d'actionnement, et le contour supérieur (44) des éléments de poussée (40) s'engagent avec les éléments de blocage supérieurs (56) de l'élément d'actionnement en coulissant le long de ceux-ci du fait de la rotation du rotor (36) ;
- le contour supérieur (44) des éléments de poussée (40), lorsque l'élément d'actionnement passe de la configuration d'arrêt à la configuration étendue, se désengage de l'élément de blocage supérieur (56) de l'élément d'actionnement, et le contour inférieur (48) des éléments de poussée (40) s'engage avec les évidements (68) de l'élément d'actionnement en coulissant le long desdits éléments de blocage inférieurs (64) et/ou le long desdits évidements (68) du fait de la rotation du rotor (36) ;
- le contour inférieur (48) des éléments de poussée (40), lorsque l'élément d'actionnement passe de la configuration étendue à la configuration d'arrêt, se désengage des évidements (68) de l'élément d'actionnement, et le contour supérieur (44) des éléments de poussée (40) s'engage avec les éléments de bocage supérieurs (56) de l'élément d'actionnement en coulissant le long de ceux-ci du fait de la rotation du rotor (36) ;
- le contour supérieur (44) des éléments de poussée (40), lorsque l'élément d'actionnement passe de la configuration d'arrêt à la configuration étendue, se désengage des éléments de blocage supérieurs (56) de l'élément d'actionnement, et le contour inférieur (48) des éléments de poussée (40) s'engage avec les éléments de blocage inférieurs (64) de l'élément d'actionnement en coulissant le long de ceux-ci du fait de la rotation du rotor (36).

3. Dispositif d'ouverture et de fermeture (4) selon la revendication 1 ou 2, dans lequel ladite configuration rétractée de l'élément d'actionnement correspond à une configuration fermée du bouchon (12), ledit bouchon (12) fermant ledit drain (18) dans des conditions de fonctionnement du dispositif (4), et ladite configuration étendue de l'élément d'actionnement correspond à une configuration ouverte du bouchon (12), ledit bouchon (12) maintenant ledit drain (18) ouvert dans des conditions de fonctionnement du dispositif (4).

4. Dispositif d'ouverture et de fermeture (4) selon l'une quelconque des revendications précédentes, dans lequel ledit élément d'actionnement comprend un corps (8) associé ou pouvant être associé solidairement au bouchon de fermeture (12) et pouvant coulisser en translation le long dudit axe d'actionnement (X-X), le corps (8) comportant une ouverture inférieure (20), tournée vers la tige (16) et traversée par celle-ci, et une ouverture supérieure (22) opposée à l'ouverture inférieure (20) par rapport audit axe d'actionnement (X-X), et un couvercle (28) associé à l'état fermé à l'ouverture supérieure (22) dudit corps (8), lesdits éléments de blocage supérieurs (56) étant associés audit couvercle (28) et lesdits éléments de blocage inférieurs (64) et évidements (68) étant associés audit corps (8).

5. Dispositif d'ouverture et de fermeture (4) selon l'une quelconque des revendications précédentes, comprenant un support de rotor (52) solidaire de ladite tige (16) ou pouvant coulisser le long dudit axe d'actionnement (X-X) par rapport à celle-ci, placé à l'intérieur dudit rotor (36) et coaxialement à celui-ci et formé de manière à accoupler en rotation, sur ledit axe d'actionnement (X-X), le rotor (36) et la tige (16).

6. Dispositif d'ouverture et de fermeture (4) selon l'une quelconque des revendications précédentes, dans lequel le rotor (36) a une forme cylindrique et est pourvu, sur sa paroi latérale extérieure (72), desdits éléments de poussée (40).

7. Dispositif d'ouverture et de fermeture (4) selon l'une quelconque des revendications précédentes, dans lequel les contours supérieurs (44) des éléments de poussée (40) ont une forme correspondant à celle des éléments de blocage supérieurs (56) de l'élément d'actionnement, et sont réalisés sous la forme de parties d'hélice, de manière à définir des plans supérieurs tangents auxdites parties d'hélice inclinées avec un angle d'inclinaison oblique (α) par rapport à un plan médian (M-M) normal audit axe d'actionnement (X-X).

8. Dispositif d'ouverture et de fermeture (4) selon l'une quelconque des revendications précédentes, dans lequel lesdits éléments de blocage supérieurs (56) de l'élément d'actionnement comprennent des butées supérieures (76) adaptées pour arrêter un mouvement de coulissement alternatif entre les contours supérieurs (44) de chaque l'élément de poussée (40) et les éléments de blocage supérieurs (56) eux-mêmes.

9. Dispositif d'ouverture et de fermeture (4) selon l'une quelconque des revendications précédentes, dans lequel les contours inférieurs (48) des éléments de poussée (40) ont une forme correspondant à celle des éléments de blocage inférieurs (64) et des évidements (68) de l'élément d'actionnement, et sont réalisés sous la forme de parties d'hélice, de manière à définir des plans inférieurs tangents auxdites parties d'hélice inclinées avec un angle d'inclinaison oblique (β) par rapport à un plan médian (M-M) normal audit axe d'actionnement (X-X).

10. Dispositif d'ouverture et de fermeture (4) selon les revendications 7 et 9, dans lequel lesdits plans supérieur et inférieur forment des angles d'inclinaison (α, β) opposés l'un à l'autre par rapport audit plan médian (M-M) normal audit axe d'actionnement (X-X), de sorte que les éléments de poussée (40) prennent généralement une configuration sensiblement triangulaire ou trapézoïdale.

11. Dispositif d'ouverture et de fermeture (4) selon l'une quelconque des revendications précédentes, dans lequel les éléments de blocage inférieurs (64) de l'élément d'actionnement comprennent des butées inférieures (80), chaque butée inférieure étant interposée entre un élément de blocage inférieur (64) et un évidement (68) consécutif, et comportant des surfaces de butée latérales (81) adaptées pour mettre en oeuvre un arrêt du mouvement de coulissement alternatif entre les contours inférieurs (48) de chaque élément de poussée (40) et les éléments de blocage inférieurs (64) eux-mêmes.

12. Dispositif d'ouverture et de fermeture (4) selon l'une quelconque des revendications précédentes lorsqu'il dépend des revendications 4 et 5, dans lequel le couvercle (28) est associé solidairement à une broche centrale (84), coaxiale au corps (8), ladite broche centrale (84) étant insérée à l'intérieur dudit ressort d'actionnement (32) et à l'intérieur dudit support de rotor (52).

13. Dispositif d'ouverture et de fermeture (4) selon la revendication précédente, dans lequel le support de rotor (52) est en butée sur un rétrécissement (88) de la tige (16), le support de rotor (52) comprenant un bord périphérique (92) qui contraint axialement le rotor (36) entre le support de rotor (52) et la tige (16).

14. Dispositif d'ouverture et de fermeture (4) selon la revendication précédente, dans lequel le support de rotor (52) est conçu de manière à ce qu'il y ait un jeu axial (96) entre ledit bord périphérique (92) et le rotor (36) lorsque le support de rotor (52) est en butée sur le rétrécissement (88) de ladite tige (16).
